# EUROPEAN PATENT APPLICATION

(11) **EP 2 264 208 A1**
(43) Date of publication of application: **22.12.2010**
(21) Application number: 09722466.1
(22) Date of filing: 18.03.2009
(51) Int. Cl.: C23C 4/10, F01D 5/28, F02C 7/00, F23R 3/42

(54) **COATING STRUCTURE AND SURFACE TREATING METHOD**

(30) Priority: 21.03.2008 JP 2008074603
(71) Applicant: IHI Corporation, Tokyo 135-8710 (JP)
(72) Inventor: Tanaka, Yasutomo, Tokyo 135-8710 (JP); Murata, Hiroshige, Tokyo 135-8710 (JP)
(74) Representative: Waldren, Robin Michael
(86) International application number: PCT/JP2009/055345
(87) International publication number: WO 2009/116596

(57) **Abstract**

A high temperature component (2) has an intermediate layer (3) formed by a spraying on a surface in part thereof and comprised of an oxide ceramics set containing a glass, and an environment resistant coat (4) formed on a surface of the intermediate layer (3) and comprised of a coating material having a heat resistance and a water vapor wall-thinning resistance. The oxide ceramics set is a set of kinds of oxide ceramics adapted to be unchanged in crystalline phase, or isometric in cubic volume even when phase-changed, within a temperature range from a room temperature to 1,400 degrees C, the set of kinds of oxide ceramics having a coefficient of thermal expansion between a coefficient of thermal expansion of an SiC series ceramics matrix composite constituting the high temperature component (2) and a coefficient of thermal expansion ofthe coating material constituting the environment resistant coat (4).

## Description

### Technical Field

The present invention relates tu a coating structure and a surface processing method that afford to have a heat resistance and a water vapor wall-thinning resistance secured at least in part of a high temperature component such as a gas turbine component.

### Background Art

In recent years, there have been attentions focused on SiC series ceramics matrix composites (CMC) being small in specific gravity, and better in heat resistance than heat resistant alloys such as nickel alloys, as materials for high temperature components such as a gas turbine component to be used under high temperature gas environments containing water vapor. In this regard, it is known that in high temperature gases the water vapor acts on Si-containing materials, causing the wall to be thinned, so in use of such an SiC series ceramics matrix composite selected as a material for a high temperature component, the high temperature component should have a heat resistance and a water vapor wall-thinning resistance secured at least in part thereof Typically, for a heat resistance and a water vapor wall-thinning resistance to be secured, there is a coating structure implemented in part of a high temperature component, as follows:

That is, the high temperature component has an intermediate layer formed on a surface in part thereof, and comprised of a set of oxide ceramics containing a glass. The intermediate layer has an environment resistant coat formed on a surface thereof, and comprised of a coating material having a heat resistance and a water vapor wall-thinning resistance. In other words, the high temperature component has the environment resistant coat formed on a surface in part thereof with the intermediate layer in between. Those oxide ceramics constituting the intermediate layer have coefficients of thermal expansion residing between a coefficient of thermal expansion of an SiC series ceramics matrix composite constituting the high temperature component and a coefficient of thermal expansion of the coating material constituting the environment resistant coat.

This permits the intermediate layer to work for stepwise relaxing residual stresses in the environment resistant coat due to differences in thermal expansion between the high temperature component and the environment resistant coat, suppressing cracks and detachment of the environment resistant coat, allowing for the high temperature component to have a heat resistance and a water vapor wall-thinning resistance ensured over a long service.

As techniques relevant to the present invention, there have been those disclosed in a patent literature 1 or a patent literature 2 listed below.
Patent literature 1: Japanese Patent Application Laying-Open Publication No. 2004-346428
Patent literature 2: Japanese Patent Application Laying-Open Publication No. 2005-200226

### Summary of The Invention

In this concern, for formation of intermediate layers comprised of oxide ceramics, there has been employed a thermal spray method affording to implement the coating structure with ease and certainty. However, intermediate layers formed by a spraying have unstable particles of ceramics (sprayed particles) therein. Once exposed to heat under high temperature gas environments of 900 degrees C or more, such ceramics particles in intermediate layers are sintered, with a transition to stable status, causing the intermediate layers to contract in cubic volume. For this reason, in high temperature components used under high temperature gas environments of 900 degrees C or more, intermediate layers had tendencies to crack or get detached, so such high temperature components have been subject to a difficulty in ensuring heat resistance and water vapor wall-thinning resistance over a long service. That is, as an issue in implementing a coating structure, or in other words, in implementing a surface processing to be convenient with ease and certainty, there has been a difficulty for high temperature components in use under high temperature gas environments of 900 degrees C or more to have a combination of heat resistance and water vapor wall-thinning resistance secured over a long service.

With that, it is an object of the present invention to provide anew a coating structure and a surface processing method affording to solve such an issue.

To achieve the object described, according to a first aspect of the present invention, there is a coating structure for a combination of heat resistance and water vapor wall-thinning resistance to be secured at least in part of a high temperature component comprised of an SiC series ceramics matrix composite for use under a hot temperature gas atmosphere containing water vapor, the coating structure comprising an intermediate layer formed by a spraying on a surface in part of the high temperature component, and comprised of an oxide ceramics set containing a glass, and an environment resistant coat formed on a surface of the intermediate layer, and comprised of a coating material having a heat resistance and a water vapor wall-thinning resistance, wherein the oxide ceramics set constituting the intermediate layer comprises a set of kinds of oxide ceramics adapted to be unchanged in crystalline phase, or isometric in cubic volume even when phase-changed, within a temperature range from a room temperature to 1,400 degrees C, the set of kinds of oxide ceramics having a coefficient of thermal expansion between a coefficient of thermal expansion ofthe SiC series ceramics matrix composite constituting the high temperature component and a coefficient of thermal expansion ofthe coating material constituting the environment resistant coat.

According to a second aspect of the present invention, there is a surface processing method for a combination of heat resistance and water vapor wall-thinning resistance to be secured at least in part of a high temperature component comprised of an SiC series ceramics matrix composite for use under a hot temperature gas atmosphere containing water vapor, the surface processing method comprising an intermediate layer forming step of making a thermal spray using powder of an oxide ceramics set containing a glass, as a spray material, depositing semi-molten powder of the oxide ceramics set on a surface in part of the high temperature component, forming an intermediate layer thereon, and an environment resistant coat forming step of having a completion of the intermediate layer forming step followed by making a thermal spray using powder of a coating material having a heat resistance and a water vapor wall-thinning resistance, as a spray material, depositing semi-molten powder of the coating material on a surface of the intermediate layer, forming an environment resistant coat thereon, wherein the oxide ceramics set used in the intermediate layer forming step comprises a set of kinds of oxide ceramics adapted to be unchanged in crystalline phase, or isometric in cubic volume even when phaso-changed, within a temperature range from a room temperature to 1,400 degrees C, the set of kinds of oxide ceramics having a coefficient of thermal expansion between a coefficient of thermal expansion of the SiC series ceramics matrix composite constituting the high temperature component and a coefficient of thermal expansion of the coating material constituting the environment resistant coat.

### Brief Description of Drawings

[Fig. 1] Fig. 1 is a set of illustrations describing a coating structure and a surface processing method according to an embodiment of the present invention.
[Fig. 2] Fig. 2 is a pair of graphs showing results of thermal expansion tests on two test specimens simulating intermediate layers, in which Fig. 2(a) plots results of a thermal expansion test on a test specimen A as a comparative example, and Fig. 2(b) plots results of a thermal expansion test on a test specimen B as an embodiment example.
[Fig. 3] Fig. 3 is a pair of illustrations of systems of ceramics particles in parts ofthe two test specimens in Fig. 2, in which Fig. 3(a) illustrates a system of ceramics particles in part ofthe test specimen A, and Fig. 3(b) illustrates a system of ceramics particles in part ofthe test specimen B.
[Fig. 4] Fig. 4 is a pair of photographs presenting coating structures in high temperature components before exposure to heat, in which Fig. 4(a) shows a section of a coating structure according to a comparative example, and Fig. 4(b) shows a section of a coating structure according to an embodiment example.
[Fig. 5] Fig. 5 is a table listing appearances of coating structures before and after exposure tests to atmosphere at 1,300 degrees C by way of comparing the comparative example and the embodiment example in Fig.4.
[Fig. 6] Fig. 6 is a photograph showing a section of a coating structure after an exposure test to atmosphere according to the embodiment example in Fig. 5.

### Description of Embodiments

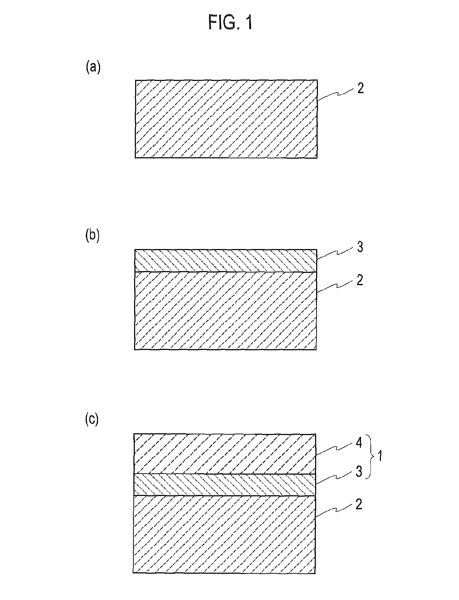

There will be described embodiments of the present invention with reference to Fig. 1 to Fig. 6.

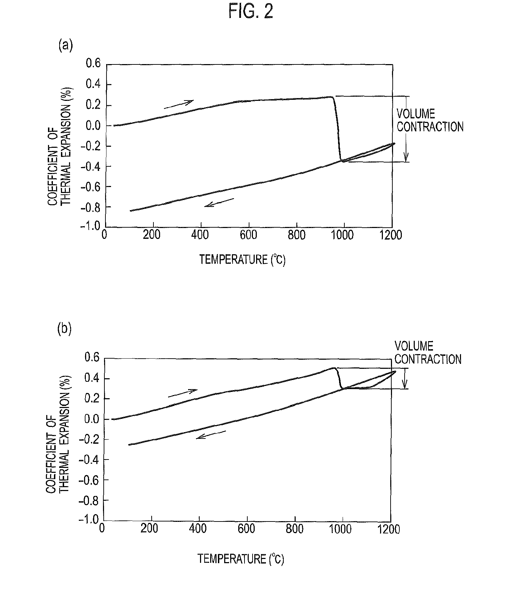

[1] Description is now made of new knowledge constituting a premise of a coating structure and a surface processing method according to an embodiment ofthe present invention, with reference to Fig. 2.

Fig. 2 plots results of thermal expansion tests made on a test specimen A (as a comparative example: non-depicted) and a test specimen B (as an embodiment example: non-depicted) each simulating an intermediate layer.

More specifically, for the comparative example, there was a set of test specimens A modulating an intermediate layer, fabricated by a vacuum spray using a powder of 3Al₂O₃•2SiO₂ - mullite, as a spray material. For the embodiment example, there was a set of test specimens B modulating an intermediate layer, fabricated by a vacuum spray using, as a spray material, a combination of powder of 3Al₂O₃•2SiO₂- mullite and powder of Yb₂SiO₅ being powders mixed (as a powder with a mix proportion prepared to have a volume proportion of 1:1 after formation of a sprayed coat). There were thermal expansion tests made of a test specimen A and a test specimen B at varied environment temperatures (increased from a room temperature to 1,200 degrees C and decreased from 1,200 degrees C to 100 degrees C), measuring coefficients of thermal expansion of the test specimen A and the test specimen B. Then, for test specimen A, thermal expansion test results were collected in the form Fig. 2(a). For test specimen B, thermal expansion test results were collected in the form Fig. 2(b).

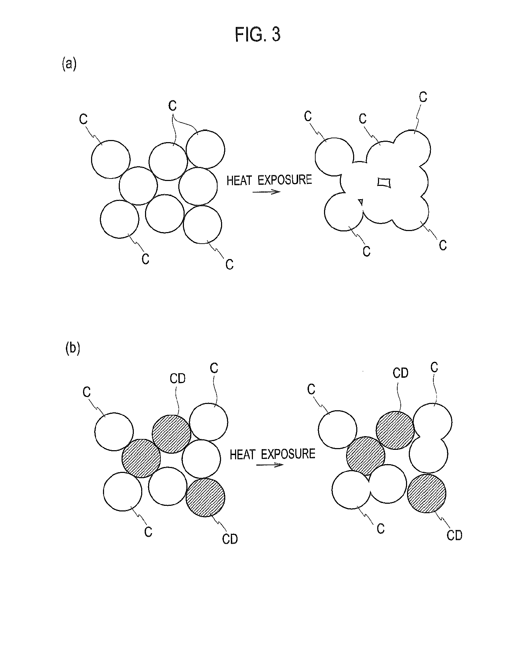

As apparent from Fig. 2(a) and Fig. 2(b), as the environment temperature was increased, exceeding 900 degrees C, the coefficient of thermal expansion of test specimen A dropped by a large degree, causing a large contraction in volume of test specimen A, but instead the coefficient of thermal expansion of test specimen B dropped by a suppressed degree in comparison with test specimen A, with a resultant reduction in volume contraction of test specimen B. This is because of an exposure once made to heat under high temperature gas environment of 900 degrees C or more, that acted, as illustrated in Fig. 3(a) for test specimen A, on particles of a ceramics C (sprayed particles) in test specimen A, causing them to be sintered for transition to a stable state, but instead as illustrated in Fig. 3(b) for test specimen B, on particles of ceramics C and CD (sprayed particles) in test specimen B, affording to suppress their sintering.

In addition, there was a set of test specimens C (non-depicted) fabricated by using powder of Yb₂SiO₂O₇ substituting for the powder of Yb₂SiO₅, of which also thermal expansion tests were made, successfully obtaining similar results to thermal expansion test results oftest specimen B.

For 3Al₂O₃•2SiO₂, Yb₂SiO₅, and Yb₂Si₂O₇, they are all oxide ceramics adapted to be unchanged in crystalline phase within a temperature range from a room temperature to 1,400 degrees C. It is speculated that there should be obtained similar effects to the effects of thermal expansion test described, also in use of oxide ceramics substituting for oxide ceramics adapted to be unchanged in crystalline phase within a range from room temperature to 1,400 degrees C, as those oxide ceramics are adapted to be isometric in cubic volume, even if phase-changed, within the range from room temperature to 1,400 degrees C.

On bases of results of the thermal expansion tests described there is obtained new knowledge such that, for a respective intermediate layer comprised of a set of kinds of oxide ceramics adapted to be unchanged in crystalline phase or isometric in cubic volume even if phase-changed within a temperature range from a room temperature to 1,400 degrees C, the intermediate layer can work, even if it is formed by a thermal spray, to suppress development of a sintering that particles of ceramics (sprayed particles) in the intermediate layer tend to undergo with an exposure once made to heat under high temperature gas environments of 900 degrees C or more, thus allowing for a reduced contraction in volume of the intermediate layer.

[2] Description is now made of a coating structure according to a certain embodiment of the present invention, with reference to Fig. 1.

According to the embodiment of the present invention, as illustrated in Fig. 1(c), there is a coating structure 1 adapted for a combination of heat resistance and water vapor wall-thinning resistance to be secured at least in part of a gas turbine component 2 (as an example of high temperature component) for use under a hot temperature gas atmosphere containing water vapor, and configured with the following particulars. It is noted that the gas turbine component 2, which may be a turbine blade for instance, is comprised of an SiC series ceramics matrix composite.

The gas turbine component 2 has an intermediate layer 3 formed by way of a vacuum spray on a surface in part of the gas turbine component 2, and comprised of an oxide ceramics set containing a glass. It is noted that the intermediate layer 3 may be formed by way of an atmospheric spray substituting for the vacuum spray

The intermediate layer 3 has an environment resistant coat 4 formed by way of an atmospheric spray on a surface thereof, and comprised of an oxide ceramics (as an example of coating material) having a heat resistance and a water vapor wall-thinning resistance. In other words, the gas turbine component 2 has the environment resistant coat 4 formed on a surface in part thereof, with the intermediate layer 3 interposed in between. Here, the oxide ceramics constituting the environment resistant coat 4 may be a rare-earth oxide, a rare-earth silicate, a strontium aluminosilicate, or a Group-IVA metal oxide. It is noted that the environment resistant coat 4 may be formed by way of a vacuum spray substituting for the atmospheric spray

According to this embodiment of the present invention, in the coating structure 1, the oxide ceramics set constituting the intermediate layer 3 is comprised of a pair of kinds of oxide ceramics adapted to be unchanged in crystalline phase, or isometric in cubic volume even when phase-changed, within a temperature range from a room temperature to 1,400 degrees C. More specifically, it is comprised of a combination of 3Al₂O₃•2SiO₂ and Yb₂SiO₅, or of a combination of 3Al₂O₃•2SiO₂ and Yb₂Si₂O₇. Further, the pair of kinds of oxide ceramics constituting the intermediate layer 3 has a coefficient of thermal expansion between a coefficient of thermal expansion of the SiC series ceramics matrix composite constituting the gas turbine component 2 (3 x 10⁻⁶/ degrees C in this case) and a coefficient of thermal expansion of the oxide ceramics constituting the environment resistant coat 4 (5 to 10x10⁻⁶/ degrees C in this case). For the pair of kinds of oxide ceramics constituting the intermediate layer 3, the coefficient of thermal expansion determined depends on a mix proportion by volume of the paired kinds of oxide ceramics, or the like. Here, the mix proportion by volume of the paired kinds of oxide ceramics may be 1 : 1 for instance. As used herein, the mix proportion by volume means a volumetric proportion (as a mix proportion) after formation of a sprayed coat.

[3] Description is now made of a surface processing method according to a certain embodiment ofthe present invention, with reference to Fig. 1.

According to the embodiment of the present invention, the surface processing method is adapted for a combination of heat resistance and water vapor wall-thinning resistance to be secured at least in part of a gas turbine component 2 (refer to Fig. 1(a)) for use under a hot temperature gas atmosphere containing water vapor, and includes an intermediate layer forming step and an environment resistant coat forming step, as follows:

### < Intermediate layer forming step>

This is a step of making a vacuum spray using powder of an oxide ceramics set containing a glass, as a spray material, depositing semi-molten powder of the oxide ceramics set on a surface in part ofthe gas turbine component 2. This affords, as illustrated in Fig. 1(b), to have an intermediate layer 3 formed on part of the gas turbine component 2. It is noted that the intermediate layer 3 may be formed by way of an atmospheric spray substituting for the vacuum spray

### <Environment resistant coat forming step>

This is a step of having a completion of the intermediate layer forming step followed by making an atmospheric spray using powder of an oxide ceramics (as an example of coating material) having a heat resistance and a water vapor wall-thinning resistance, as a spray material, depositing semi-molten powder of the oxide ceramics on a surface of the intermediate layer 3. This affords, as illustrated in Fig. 1(c), to have an environment resistant coat 4 formed on a surface of the intermediate layer 3. In other words, the gas turbine component 2 can have the environment resistant coat 4 formed on part thereof, with the intermediate layer 3 interposed in between. Here, the oxide ceramics having a heat resistance and a water vapor wall-thinning resistance may be a rare-earth oxide, a rare-earth silicate, a strontium aluminosilicate, or a Group-IVA metal oxide. It is noted that the environment resistant coat 4 may be formed by way of a vacuum spray substituting for the atmospheric spray.

According to this embodiment of the present invention, in the surface processing method, the oxide ceramics set used in the intermediate layer forming step is comprised of a pair of kinds of oxide ceramics adapted to be unchanged in crystalline phase, or isometric in cubic volume even when phase-changed, within a temperature range from a room temperature to 1,400 degrees C. Here, it is comprised of a combination of 3Al₂O₃•2SiO₂ and Yb₂SiO₅, or of a combination of 3Al₂O₃•2SiO₂ and Yb₂Si₂O₇. Further, the pair of kinds of oxide ceramics used in the intermediate layer forming step has a coefficient of thermal expansion between a coefficient of thermal expansion of an SiC series ceramics matrix composite constituting the gas turbine component 2 (3 x 10⁻⁶/ degrees C in this case) and a coefficient of thermal expansion of the oxide ceramics constituting the environment resistant coat 4 (5 to 10 x 10⁻⁶/ degrees C in this case).

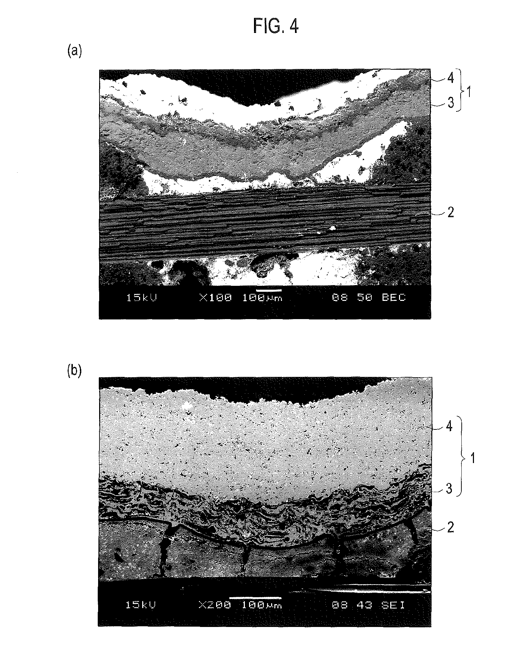

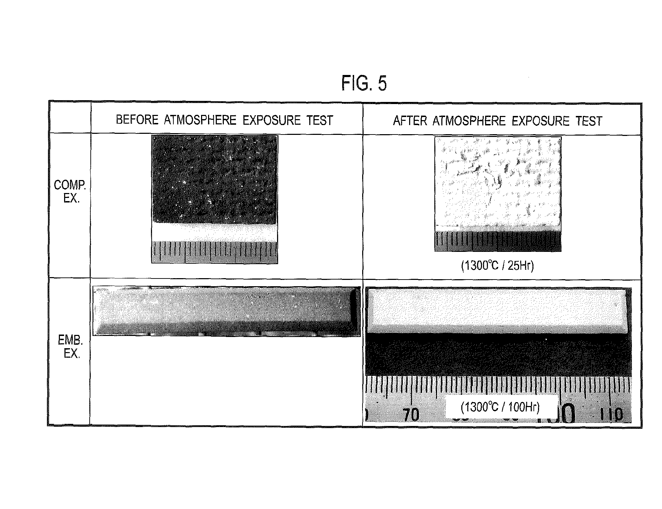

[3] Description is now made of behaviors and effects of embodiments of the present invention, with reference to Fig. 4 and Fig. 5.

There is a pair of kinds of oxide ceramics (two kinds of oxide ceramics used in an intermediate layer forming step) constituting an intermediate layer 3, and having a coefficient of thermal expansion between a coefficient of thermal expansion of an SiC series ceramics matrix composite constituting a gas turbine component 2 and a coefficient of thermal expansion of an oxide ceramics constituting an environment resistant coat 4, permitting the intermediate layer 3 to work for stepwise relaxing residual stresses in the environment resistant coat 4 due to differences in thermal expansion between the gas turbine component 2 and the environment resistant coat 4.

Moreover, the pair of kinds of oxide ceramics constituting the intermediate layer 3 is adapted to be unchanged in crystalline phase, or isometric in cubic volume even when phase-changed, within a temperature range from a room temperature to 1,400 degrees C. This affords, in view ofthe afore-mentioned new knowledge, to have the intermediate layer 3 work, even if it is formed by a thermal spray, to suppress development of a sintering that particles of ceramics C and CD in the intermediate layer 3 tend to undergo with an exposure once made to heat under high temperature gas environments of 900 degrees C or more, thus allowing for a reduced contraction in volume of the intermediate layer 3.

Further, the intermediate layer 3 can be formed by way of a vacuum spray (that is, the intermediate layer 3 can he formed by a vacuum spray in the intermediate layer forming step), affording to have a densified texture of intermediate layer 3, acting on high temperature gases containing water vapor, allowing for a sufficient suppression of the permeation through intermediate layer 3.

Therefore, according to embodiments of the present invention, there is an intermediate layer 3 enabled to work, even if it is formed by a thermal spray, to suppress development of a sintering that particles of ceramics C and CD in the intermediate layer 3 tend to undergo with an exposure once made to heat under high temperature gas environments of 900 degrees C or more, thus allowing for a reduced contraction in volume of the intermediate layer 3. Accordingly, it is enabled to implement a coating structure (or to implement a surface processing) to be convenient with ease and certainty suppressing cracks and detachment of the intermediate layer 3, allowing for a gas turbine component to have a heat resistance and a water vapor wall-thinning resistance ensured over a long service.

Fig. 4 is a pair of photographs presenting coating structures in high temperature components before exposure to heat, in which Fig. 4(a) shows a section of a coating structure according to a comparative example, and Fig. 4(b) shows a section of a coating structure according to an embodiment example. The comparative example implements coating a high temperature component, to form a coating structure by spraying: a powder of 3Al₂O₃•2SiO₂ - mullite as a spray material for an intermediate layer; and a powder of HfO₂ as that for an environment resistant coat. The embodiment example implements coating a high temperature component, to form a coating structure by spraying: a combination of powder of 3Al₂O₃•2SiO₂ - mullite and powder of Yb₂SiO₅ being powders mixed (as a powder with a mix proportion prepared to have a volume proportion of 1 : 1 after formation of a sprayed coat) as a spray material for an intermediate layer; and a powder of HfO₂ as that for an environment resistant coat.

Fig. 5 is a table listing appearances of coating structures before and after exposure tests to atmosphere at 1,300 degrees C by way of comparing the comparative example and the embodiment example in Fig.4. As being apparent from comparison of appearances before and after exposure test to atmosphere between the comparative example and the embodiment example, there were traces of detachment found in the coating according to the comparative example, while there was no trace of detachment found in the coating according to the embodiment example.

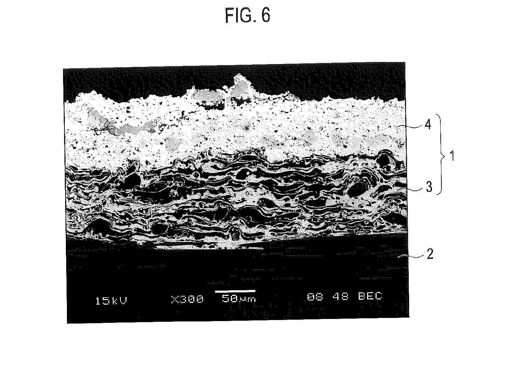

Fig. 6 is a photograph showing a section of a coating structure after an exposure test to atmosphere according to the embodiment example in Fig. 5. As being apparent from an upper right photograph in Fig. 5, the comparative example had pieces of coating detached through the exposure test to atmosphere, while as being apparent from a section shown in Fig. 6, the embodiment example had a coating kept undetached through the exposure test to atmosphere.

Further, when formed by a vacuum spray, the intermediate layer 3 can work to act on high temperature gases containing water vapor, sufficiently suppressing the permeation through intermediate layer 3, allowing for the more enhanced water vapor wall-thinning resistance of gas turbine component 2.

It is noted that the present invention is not restricted to the embodiments described, and may be implemented in a variety of embodiments else. Further, the scope of right the present invention covers should be construed non-restrictive to the embodiments described.

### Industrial Applicability

According to the present invention, there is an intermediate layer enabled to work, even if it is formed by a thermal spray, to suppress development of a sintering that particles of ceramics in the intermediate layer tend to undergo with an exposure once made to heat under high temperature gas environments of 900 degrees C or more, allowing for a reduced contraction in volume of the intermediate layer, while affording to implement a coating structure, or to implement a surface processing, to be convenient with ease and certainty, suppressing cracks and detachment of the intermediate layer, thus permitting high temperature components in use under high temperature gas environments of 900 degrees C or more to have a combination of heat resistance and water vapor wall-thinning resistance secured over a long service.

## Claims

1. A coating structure for a combination of heat resistance and water vapor wall-thinning resistance to be secured at least in part of a high temperature component comprised of an SiC series ceramics matrix composite for use under a hot temperature gas atmosphere containing water vapor, the coating structure comprising:
an intermediate layer formed by a spraying on a surface in part ofthe high temperature component, and comprised of an oxide ceramics set containing a glass; and
an environment, resistant coat formed on a surface of the intermediate layer, and comprised of a coating material having a heat resistance and a water vapor wall-thinning resistance, wherein
the oxide ceramics set constituting the intermediate layer comprises a set of kinds of oxide ceramics adapted to be unchanged in crystalline phase, or isometric in cubic volume even when phase-changed, within a temperature range from a room temperature to 1,400 degrees C, the set of kinds of oxide ceramics having a coefficient of thermal expansion between a coefficient of thermal expansion of the SiC series ceramics matrix composite constituting the high temperature component and a coefficient of thermal expansion of the coating material constituting the environment resistant coat.

2. The coating structure according to claim 1, wherein the set of kinds of oxide ceramics constituting the intermediate layer comprises 3Al₂O₃•2SiO₂ and Yb₂SiO₅.

3. The coating structure according to claim 1 or 2, wherein the intermediate layer is formed by way of a vacuum spraying.

4. The coating structure according to any one of claims 1 to 3, wherein the coating material constituting the environment resistant coat comprises a rare-earth oxide, a rare-earth silicate, a strontium aluminosilicate, or a Group-IVA metal oxide.

5. A surface processing method for a combination of heat resistance and water vapor wall-thinning resistance to be secured at least in part of a high temperature component comprised of an SiC series ceramics matrix composite for use under a hot temperature gas atmosphere containing water vapor, the surface processing method comprising:
an intermediate layer forming step of making a thermal spray using powder of an oxide ceramics set containing a glass, as a spray material, depositing semi-molten powder of the oxide ceramics set on a surface in part of the high temperature component, forming an intermediate layer thereon; and
an environment resistant coat forming step of having a completion of the intermediate layer forming step followed by making a thermal spray using powder of a coating material having a heat resistance and a water vapor wall-thinning resistance, as a spray material, depositing semi-molten powder of the coating material on a surface of the intermediate layer, forming an environment resistant coat thereon, wherein
the oxide ceramics set used in the intermediate layer forming step comprises a set of kinds of oxide ceramics adapted to be unchanged in crystalline phase, or isometric in cubic volume even when phase-changed, within a temperature range from a room temperature to 1,400°C, the set ofkinds of oxide ceramics having a coefficient of thermal expansion between a coefficient of thermal expansion of the SiC series ceramics matrix composite constituting the high temperature component and a coefficient of thermal expansion of the coating material constituting the environment resistant coat.

6. The surface processing method according to claim 5, wherein the set of kinds of oxide ceramics used as powder to constitute the intermediate layer comprises powders of 3Al₂O₃•2SiO₂ and Yb₂SiO₅.

7. The surface processing method according to claim 5 or 6, wherein the intermediate layer forming step comprises making a vacuum spray to form the intermediate layer
